(19) Europäisches Patentamt
European Patent Office
Office européen des brevets

(11) **EP 3 754 596 A1**

(12) **EUROPEAN PATENT APPLICATION**

(43) Date of publication:
**23.12.2020 Bulletin 2020/52**

(51) Int Cl.:
***G06T 7/00*** (2017.01)

(21) Application number: **19180900.3**

(22) Date of filing: **18.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ECOLE POLYTECHNIQUE FEDERALE DE LAUSANNE (EPFL)**
**1015 Lausanne (CH)**

(72) Inventors:
• **Descloux, Adrien**
  **1115 VULLIERENS (CH)**
• **Radenovic, Aleksandra**
  **1024 ECUBLENS VD (CH)**

(74) Representative: **Kraus & Weisert**
**Patentanwälte PartGmbB**
**Thomas-Wimmer-Ring 15**
**80539 München (DE)**

(54) **BENCHMARKING OF SINGLE IMAGING DATASETS**

(57)    A method of estimating a value (311-313) indicative of a signal component of an input imaging dataset (190) includes determining a normalized Fourier-domain representation of the input imaging dataset (190); and for each one of multiple low-pass filters (320) having varying cut-off frequencies (301, 301-1, 301-2): determining the respective low-pass filtered normalized Fourier-domain representation of the input imaging dataset (190) based on the normalized Fourier-domain representation of the input imaging dataset and performing a respective comparison of the respective low-pass filtered normalized Fourier-domain representation of the input imaging dataset with the input imaging dataset; and based on results (302, 303) of the comparisons associated with the low-pass filters: estimating the value (311-313) indicative of the signal component of the input imaging dataset (190).

## FIG. 5

**Description**

TECHNICAL FIELD

Various examples of the invention generally relate to benchmarking of single images, e.g., by estimating a value of a signal component or a value indicative of a resolution of the imaging datasets. Various examples of the invention specifically relate to benchmarking of the imaging datasets without a-priori knowledge or user parameter settings.

BACKGROUND

A wide range of imaging modalities to acquire imaging datasets are known. Example imaging modalities include: optical microscopy; atomic force microscopy; charged particle microscopy including scanning electron microscopy or focused ion beam microscopy; magnetic resonance imaging; x-ray imaging; etc.

A common task for such imaging modalities is to estimate a quality of the imaging dataset. For example, if one or more imaging modality configuration parameters are poorly set, then the quality of the imaging dataset can suffer.

For example, for optical microscopy, techniques are known to estimate a resolution. This can include determining a point-spread function of the sensor device of the imaging modality and appropriated noise contributions. In Fourier space, the sample spectrum is multiplied by the frequency support of the system.

Typical techniques to determine the frequency support of the sensor device rely on prior knowledge on the sensor device or the operation of the sensor device. For example, the use of Fourier Ring Correlation (FRC) using two independent images of the same object has been proposed for resolution estimation of electron microscopy images. See Heel, M. Van. Similarity measures between images. Ultramicroscopy 21, 95-100 (1987); and Saxton, W. & Baumeister, W. The correlation averaging of a regularly arranged bacterial cell envelope protein. J. Microsc. 127, 127--138 (1982). The concept was expanded to 3D via Fourier Shell Correlation. See Harauz, G. & van Heel, M. Exact filters for general geometry three dimensional reconstruction. Optik 78, 146-156 (1986). In such techniques, if there are wrong assumptions made in connection with the prior knowledge, the determination of the frequency support can suffer. Then, the estimation of the quality of the imaging dataset can be negatively affected.

SUMMARY

Accordingly, a need exists for techniques which facilitate estimating a quality of an imaging dataset. More specifically, a need exists for techniques that facilitate estimating a value indicative of the signal component of the imaging dataset or estimating a value indicative of a resolution of the imaging dataset.

This need is met by the features of the independent claims. The features of the dependent claims define embodiments.

As a general rule, the techniques described herein facilitate estimating a quality of an imaging dataset, e.g., during image acquisition to optimize acquisition configuration parameters or in image post-processing in order to choose optimal post-processing configuration parameters

A method of estimating a value indicative of a signal component of an input imaging dataset includes determining a normalized Fourier-domain representation of the input imaging dataset. The method also includes, for each one of multiple low-pass filters having varying cut-off frequencies: determining the respective low-pass filtered normalized Fourier-domain representation of the input imaging dataset based on the normalized Fourier-domain representation of the input imaging dataset and performing a respective comparison of the respective low-pass filtered normalized Fourier-domain representation of the input imaging dataset with the input imaging dataset. The method further includes estimating the value indicative of the signal component of the input imaging dataset based on results of the comparisons associated with the low-pass filters.

A computer program or a computer-program product or a computer-readable storage medium includes program code. The program code can be executed by at least one processor. Executing the program code causes the at least one processor to perform a method of estimating a value indicative of a signal component of an input imaging dataset. The method includes determining a normalized Fourier-domain representation of the input imaging dataset. The method also includes, for each one of multiple low-pass filters having varying cut-off frequencies: determining the respective low-pass filtered normalized Fourier-domain representation of the input imaging dataset based on the normalized Fourier-domain representation of the input imaging dataset and performing a respective comparison of the respective low-pass filtered normalized Fourier-domain representation of the input imaging dataset with the input imaging dataset. The method further includes estimating the value indicative of the signal component of the input imaging dataset based on results of the comparisons associated with the low-pass filters.

A device includes control circuitry configured to determine a normalized Fourier-domain representation of an input imaging dataset. The control circuitry is also configured to, or each one of multiple low-pass filters having varying cut-off frequencies: determine the respective low-pass filtered normalized Fourier-domain representation of the input imaging dataset based on the normalized Fourier-domain representation of the input imaging dataset and perform a respective comparison of the respective low-pass filtered normalized Fourier-domain representation of the input imaging dataset with the input imaging dataset. The method further includes, based on results of the comparisons associated with the low-pass filters: estimate a value indicative of a signal component of the input imaging dataset.

It is to be understood that the features mentioned above and those yet to be explained below may be used not only in the respective combinations indicated, but also in other combinations or in isolation without departing from the scope of the invention.

BRIEF DESCRIPTIOPN OF THE DRAWINGS

FIG. 1 schematically illustrates a system according to various examples, the system including an evaluation device and an imaging device.

FIG. 2 is a flowchart of a method according to various examples.

FIG. 3 schematically illustrates a value indicative of a signal component of an imaging dataset captured by the imaging device according to various examples.

FIG. 4 is a flowchart of a method according to various examples.

FIG. 5 schematically illustrates a value indicative of a resolution of the imaging dataset captured by the imaging device according to various examples.

FIG. 6 is a flowchart of a method according to various examples.

FIG. 7 is a flowchart of a method according to various examples.

DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

The techniques described herein are concerned with benchmarking of a quality of an imaging dataset. The imaging dataset can describe, in digital format, the spatial appearance of an imaged sample / object in a respective signal component. An imaging dataset can be a non-saturated, bandwidth-limited signal with adequate spatial sampling. The imaging dataset also includes noise, in a respective noise component. A superposition of the signal component and the noise component forms the imaging dataset.

As a general rule, various kinds and types of imaging datasets may be subject to the techniques described herein. Depending on the particular imaging modality used to acquire the imaging dataset, the information content of the imaging dataset can vary. To give a few examples, the techniques described herein could be applied to imaging datasets that are acquired with an optical microscope. Pixel values of the 2D imaging dataset may then encode the phase or absorption of the sample that is imaged. Other 2D imaging datasets could encode a height profile of the sample; an example would be atomic force microscopy. Further example imaging modalities include: magnetic resonance imaging (encoding relaxation times of nuclear spins, e.g., T1 or T2 contrast, or encoding spin species contributions, e.g., water-fat); X-ray imaging (encoding absorption of x-rays); scanning electron microscopy or other types of charged-particle microscopy; etc. Besides the 2D datasets, also 1 D datasets or 3D datasets could be used using the techniques described throughout this text. An example of 3D datasets would be time-of-flight measurements with lateral and depth resolution.

One particular type of imaging modality to which the techniques described herein can be applied is super-resolution microscopy. Super-resolution microscopy operates at resolutions below the Abbe-limit, generally expressed as

$$k_c = NA \frac{2\pi}{\lambda},$$

where $NA$ is the sine of the maximum collection angle multiplied by the refractive index and $\lambda$ the illumination central wavelength. The Abbe limit generally defines the resolution in coherent imaging. Super-resolution microscopy typically overcomes the diffraction limit by exploiting specific fluorophore properties such as stimulated emission or temporal fluctuations. Therefore, image resolution needs to be reconsidered by taking into account the fluorescent properties of the sample to establish a novel resolution measure for super-resolved imaging. See Sheppard, C. J. R. Resolution and super-resolution. Microsc. Res. Tech. 80, 590-598 (2017). Such an estimator of resolution is of particular interest for autonomous adaptive microscopes that require robust tools to automatically achieve and maintain optimal performance in long-term imaging of biological samples. See Power, R. M. & Huisken, J. Adaptable, illumination patterning light sheet microscopy. Sci. Rep. 8, 1-11 (2018) ; and Štefko, M., Ottino, B., Douglass, K. M. & Manley, S. Autonomous illumination control for localization microscopy. Opt. Express 26, 30882-30900 (2018). While hereinafter various examples will be described with respect to imaging datasets that are obtained using super-resolution microscopy, similar techniques may be readily applied to other kinds and types of imaging modalities and imaging datasets.

The imaging dataset typically includes a signal component and a noise component in a superimposed manner. The signal component is indicative of the sample. According to examples described herein, it is possible to estimate properties of the signal component included in the imaging dataset.

In some examples described herein, a value that is indicative of a signal component of the imaging dataset is estimated. This value could correspond to the signal-to-noise ratio (SNR). This value could also be indicative of the signal component in absolute terms. For example, the value could be determined for various spatial frequencies, e.g., providing a spatial frequency-resolved SNR.

In some further examples described herein, a value that is indicative of a resolution of the imaging dataset is estimated. As a general rule, the resolution can describe the size of the smallest structure that can be resolved by the imaging modality. In some scenarios - such as super-resolution microscopy - the resolution can also take into account properties of the sample; here the resolution can describe the size of the smallest structure of the specific sample that can be resolved by the specific imaging modality. The resolution may correlate with the theoretical resolution as stated by Abbe (already stated above); in other examples, the resolution may correspond to the highest spatial frequency of the signal component with high enough amplitude with respect to the noise component that is included in the imaging dataset.

As a general rule, the value indicative of the resolution can be estimated based on the value indicative of the signal component. To give an example, if it is detected - based on the value indicative of the signal component - that the signal component drops below a certain predefined threshold for increasing spatial frequencies, then the particular spatial frequency for which the signal component degrades below the predefined threshold can be used to estimate the resolution of the imaging dataset. More generally, if - for a given spatial frequency - the value indicative of the signal contribution indicates a large (small) contribution of the signal component to the imaging dataset, then it can be assumed that the signal-to-noise ratio is large (small) and that, hence, structures of the sample are resolved (not resolved).

The techniques described herein facilitate estimating the value indicative of the signal component and/or the value indicative of the resolution based merely on an individual imaging dataset (e.g., not requiring reference imaging datasets of a reference sample, or not requiring a time series of multiple imaging datasets), and also without any further requirement or a priori knowledge such as user-defined parameters. The techniques of estimating described herein can operated using limited computational resources, i.e., can be implemented with a short runtime or even using real-time-processing. The techniques described herein can be implemented using only linear operations and can enable accurate benchmarking, e.g., objective assessment of image resolution and SNR.

To achieve this, the techniques described herein employ a partial phase comparison. The partial phase comparison is achieved by implementing a comparison between an (*i*) input imaging dataset and (*ii*) a normalized representation of the input imaging dataset, typically in Fourier domain. An example implementation of the comparison is a Fourier-domain correlation, e.g., a Pearson correlation. By determining the normalized Fourier-domain representation of the input imaging dataset, it is possible to balance the signal component and the noise component; while the information on the structure of the sample is preserved in the phase of the normalized Fourier-domain representation. This is because the phase is responsible for organizing the constructive and destructive interferences of the complex exponentials to form the imaging dataset, while the amplitude only plays a minor role in this process. Then, based on the comparison, it becomes possible to extract the signal component.

Next, such an example implementation, here termed decorrelation analysis, will be described.

First, an optional edge apodization can be implemented for the input imaging dataset. This is to supress high-frequency artefacts. The edge apodization can include multiplying the input imaging dataset with a cosine window function defines as:

$$W(x) = \begin{cases} \cos(k_x|x| + \varphi) & |x| \geq x_{max} - w \\ 1 & |x| < x_{max} - w \end{cases}$$

where $x \in [-x_{max}, x_{max}]$, $x_{max}$ is half the field of view, $w$ is the window length, $k_x = \frac{\pi}{w}$ and $\varphi = \pi - \frac{\pi}{w} x_{max}$.

High frequency artefacts arising for edge discontinuities are consequently minimized. The image is then Fourier transformed and all values for $r > 1$, where $r$ is the normalized radial frequency, are set to 0.

Second, the Fourier transform of the input imaging dataset is determined; this yields the Fourier-domain representation of the input imaging dataset.

$$I_n(\boldsymbol{k}) = \frac{I(\boldsymbol{k})}{|I(\boldsymbol{k})|}.$$

Third, the Fourier transform is normalized as. The t imaging dataset $I(\boldsymbol{k})$ and its normalized version $I_n(\boldsymbol{k})$ are then (cross-)correlated - or, generally, compared - in Fourier space using Pearson correlation and condensed in a single value between 0 and 1.

Fourth, it is then possible to repeat the calculation (second and third steps above), but the additionally applying a low-pass filter (LPF) to the Fourier-domain representation of the input imaging dataset, e.g., by a binary circular filter mask of radius $r \in [0,1]$ expressed in normalized frequencies. The radius $r$ defines the cut-off frequency of the LPF. Other LPFs are possible

This allows to determine the so-called correlation value *d(r)* as

$$d(r) = \frac{\iint Re\{I(\boldsymbol{k})I_n^*(\boldsymbol{k})M(\boldsymbol{k};r)\}\, dk_x dk_y}{\sqrt{\iint |I(\boldsymbol{k})|^2 dk_x dk_y \iint |I_n(\boldsymbol{k})M(\boldsymbol{k};r)|^2 dk_x dk_y}}, \qquad (1)$$

where $\boldsymbol{k} = [k_x, k_y]$ denotes Fourier space coordinates, $I(\boldsymbol{k})$ the Fourier transform of the input image, $I_n(\boldsymbol{k})$ the normalized Fourier transform and $M(\boldsymbol{k};r)$ the binary circular filter mask of radius r. $\iint$ is the double integral over $k_x$ and $k_y$.

*d(r)* is a value indicative of the signal component of the imaging dataset. This is motivated next by the following hypothetical considerations. Consider: applying the LPF by taking a radius of the binary mask equal to *r*=1 allows the extraction of the correlation value *d(r*=1) related to the original SNR. Now assuming an input imaging dataset containing only white noise, *d(r*=1) ≈ 1: since the white noise power spectrum is constant by definition and the normalization does not affect the (non-existent) signal component. Then, once a bandwidth-limited signal component is added to the input imaging dataset, the correlation value *d(r*=1) decreases, because the normalization now has a direct effect on the added signal component and thus $I_n(k)$ only partially correlates with $I(k)$. Thus, *d(r*=1) is a value indicative of the signal component of the input imaging dataset. Next, the spatial frequencies can be varied by changing the cut-off frequency of the LPF: By decreasing the radius of the mask (r < 1) - i.e., by reducing the cut-off frequency of the LPF -, it is possible to progressively remove the noise component, but preserve the signal component due to its bandwidth-limited nature. The signal component is bandwidth-limited because of the limited resolution of the imaging modality. If the image were to contain only the noise component (zero signal component), the decorrelation function would *d(r)* decrease linearly as a function of radius $r$. Now again assuming a non-zero signal component: the decorrelation function $d(r)$ will exhibit a local maximum of amplitude $A_0$ that indicates the spatial frequency $r_0$ of best noise rejection and signal preservation ratio. $r_0$ thus corresponds to the cut-off frequency of the LPF providing a maximum match between normalized Fourier-domain representation of the input imaging dataset 190 and the Fourier-domain representation of the input imaging dataset 190. Reducing the cut-off frequency of the LPF further removes more signal than noise (i.e., the signal component is reduced more than the noise component), therefore reducing the decorrelation function $d(r)$ below $A_0$ until it drops to 0 for $d(r = 0)$. The position $r_0$ of the local maximum is therefore directly related to the spatial frequency distribution of the input imaging dataset and its amplitude $A_0$ is positively correlated with the input imaging dataset SNR. Thus, $r_0$ and $A_0$ are also values indicative of the signal component of the input imaging dataset. Another value indicative of the signal component would be the geometric mean $\sqrt{r_0 A_0}$ . Here, $r_0$ is weighed by the amplitude 312. As a general rule, any other combination of $r_0$ and $A_0$ would be conceivable. For example, a linear combination of the two values could be used or a weighted geometric mean $r_0^{\gamma} A_0^{\alpha}$, to give just a few examples.

Thus, as will be appreciated from the above, by determining a respective low-pass filtered normalized Fourier-domain representation of the input imaging dataset for each one of multiple low-pass filters having varying cut-off frequencies, and performing a respective comparison of the respective low-pass filtered normalized Fourier-domain representation of the input imaging dataset with the (non-normalized) input imaging dataset, it becomes possible to estimate the value indicative of the signal component of the input imaging dataset. For example, $d(r=1)$ could be determined. More specifically, it would be possible to search for a maximum match between the multiple low-pass filtered normalized Fourier-domain representations of the input imaging dataset in the input imaging dataset and then estimate the value indicative of the signal component based on said searching. For example, $r_0$ and $A_0$ could be determined.

Details with respect to such techniques will be explained in further detail in connection with the figs.

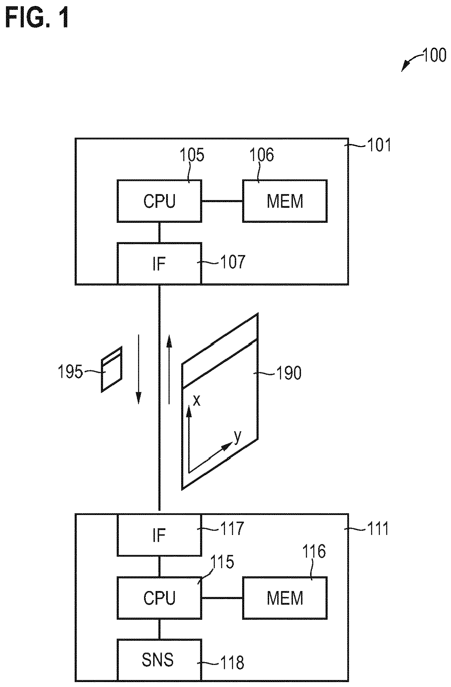

FIG. 1 schematically illustrates aspects with respect to a system 100 that is configured to implement benchmarking of an input imaging dataset 190 (illustrated in FIG. 1 to be a 2D imaging dataset being defined with respect to imaging-domain axes x and y).

The system 100 includes an analysis device 101 and an imaging device 111. For example, the imaging device 111 could be a super-resolution microscope. The imaging device 111 includes a processor 115 and a non-volatile memory 116, the processor 115 and the non-volatile memory 116 forming a control circuitry. For example, the processor 115 could load program code stored in the memory 116 and then execute the program code. Upon executing the program code, the processor 115 can perform one or more of the following tasks: acquiring the imaging dataset 190 by appropriately controlling an imaging sensor 118; transmitting the imaging dataset 190 to the analysis device 101 via an interface 117; etc.

The analysis device 101 includes a processor 105 and a non-volatile memory 106. The processor 105 and the non-volatile memory 106 form a control circuitry. For example, the processor 105 could load program code that is stored in the memory 106 and then execute the program code. Upon executing the program code, the processor 105 can perform one or more of the following tasks: benchmarking an quality of the imaging dataset 190, e.g., by estimating a value indicative of the signal component of the imaging dataset 190 and/or by estimating a value indicative of a resolution of the imaging dataset 190; applying an LPF to an imaging dataset, e.g., by Fourier-domain processing; applying a high-pass filter (HPF) to an imaging dataset, e.g., by Fourier domain processing; performing a partial phase correlation, e.g., by calculating Equation (1) multiple times for varying cut-off frequencies of the LPF, i.e., by selecting various values of $r$; normalizing a Fourier domain representation of the imaging dataset 190; transmitting control data 195 to the imaging device 111 to configure one or imaging modality configuration parameters of the imaging device 111, e.g., based on said benchmarking of the imaging quality of the imaging dataset 190.

While in the scenario of FIG. 1 the system 100 includes the analysis device 101 and the imaging device 111 as separate entities, in other examples, the logic described above in connection with the processor 105 and the non-volatile memory 106 of the analysis device 101 could be locally implemented at the processor 115 and the non-volatile memory 116 of the imaging device 111.

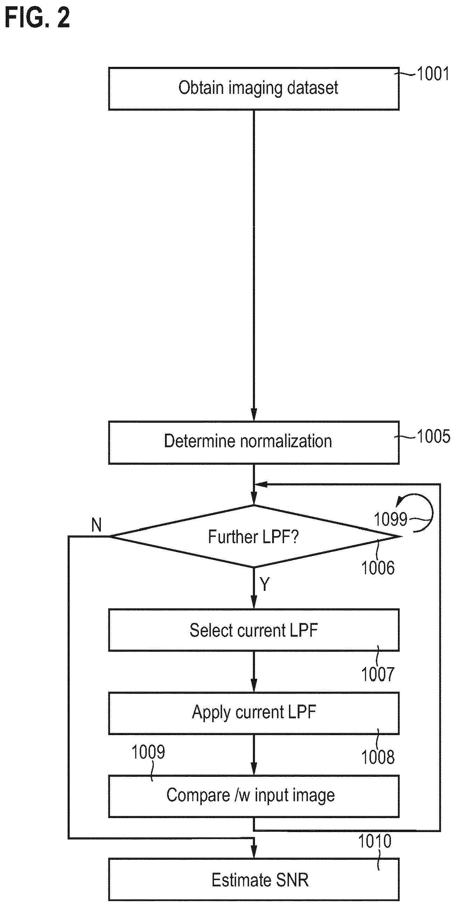

Next, details with respect to the operation of the system 100 will be explained in connection with FIG. 2.

FIG. 2 is a flowchart of a method according to various examples. For example, the method according to FIG. 2 could be implemented by a control circuitry, e.g., the control circuitry formed by the processor 105 and the non-volatile memory 106 or also the processor 115 and the non-volatile memory 116 of the imaging device 111. Hereinafter, details of the method according to FIG. 2 will be described in connection with an embodiment in which the processor 105 and the non-volatile memory 106 are used to execute the method according to FIG. 2, but similar techniques may be employed for examples in which other control circuitries are used to execute the method according to FIG. 2.

Initially, at box 1001, an imaging dataset is obtained (cf. FIG. 1: imaging dataset 190). For example, a 1D imaging dataset may be obtained, or a 2D imaging dataset may be obtained, or a 3D imaging dataset may be obtained. More specifically, the imaging dataset 190 can be obtained by the control circuitry formed by the processor 105 in the non-volatile memory 106 via the interface 107. For example, this can include transmitting control data 195 to the imaging device to trigger the acquisition.

Next, at box 1005, the normalized Fourier-domain representation of the input imaging dataset 190 is determined, i.e., $I_n(\mathbf{k})$, cf. Eq. (1).

Next, at box 1006, it is checked whether there are any yet unprocessed LPFs in a predefined set of LPFs. Different LPFs have different cut-off frequencies. If yes, then one of these yet unprocessed LPFs is selected at box 1007 and applied to the normalized Fourier-domain representation, at box 1008. For example, a binary circular filter mask may be used: $I_n(\mathbf{k})M(\mathbf{k};r)$, cf. Eq. (1). The radius is associated with the cut-off frequency. In other examples, other masks or LPFs may be used.

Then, the comparison with the (non-low-pass-filtered) input imaging dataset is performed at box 1009, e.g., using the Fourier-domain correlation, cf. Eq. (1).

Then, box 1006 is re-iterated; this defines an inner loop 1099. If still available, a new LPF is selected, having a different cut-off frequency.

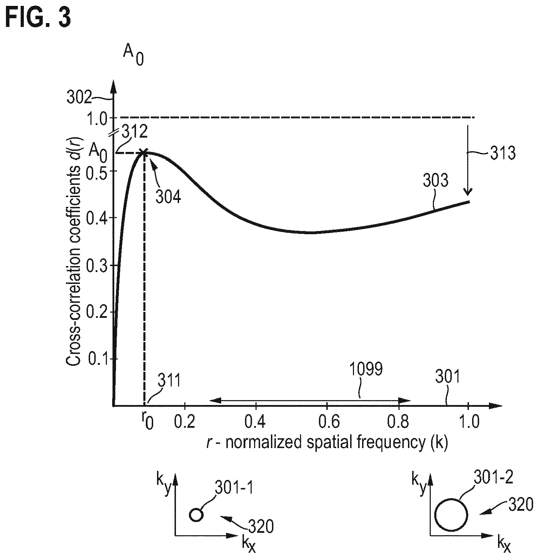

Once all LPFs have been processed, the method proceeds from box 1006 to box 1010. Here, a value indicative of the SNR is estimated, as the value indicative of the signal component of the input image dataset. This is based on the results of the comparisons at the multiple iterations of the inner loop 1009 of box 1009. Details with respect to this SNR determination are illustrated in FIG. 3.

FIG. 3 schematically illustrates the results of the comparisons at the multiple iterations of the inner loop 1009 of box 1009 (cf. FIG. 2), here specifically the decorrelation value $d(r)$, 302, for multiple LPFs, i.e., having different cut-off frequencies 301. The spatial frequencies of the cut-off frequencies 301 are illustrated in normalized values, e.g., defined with respect to a pixel size. Two LPFs implemented as binary circular filter masks 320 are exemplarily shown for the cut-off frequencies 301-1, 301-2.

A maximum 304 of the curve 303 is located at the spatial frequency 311 ($r_0$) and has an amplitude 312 ($A_0$). The reduction 313 of the decorrelation function 302 $d(r=1)$ due to the signal component (if compared to only white noise) is also illustrated. All values 311-313 are indicative of the signal contribution.

For example, the values 311, 312 - identifying the maximum match between the low-pass filtered normalized Fourier-domain representation of the input imaging dataset 190 and the input imaging dataset 190 - are positively correlated with the SNR.

Generally, a local maximum may be searched at $r<1$, to identity the values 311, 312. In some examples, a numeric search for the maximum can be implemented. To implement a fast search (limited in the need for computational resources, or facilitating real-time calculation), use is made of the finding that the decorrelation function exhibits a specific shape where it is equal to 0 for $r = 0$, raises to a certain value based on the SNR and decreases as it de-correlates. Using this assumption of the shape of $d(r)$, the following strategy for the search is used, considering that d(r) is expressed as an array [d(r=0), d(r=$\Delta$r), d(r=2$\Delta$r),..., d(r=1)], where $\Delta$r is the increment of the LPF variation. First, the maximum of the array is picked. If the position of the picked maximum is the last value of the array, this means that either the tail of $d(r)$ is larger than the local maximum or there is no local maximum. In both cases, second, the value is excluded from the array and the operation is repeated with the remaining values. Third, the loop is stopped as soon as a maximum is identified that is not the last element of the array (local maximum exists) or if there are no more values (no local maxima at all). In order to avoid the selection of noisy local maxima (very rarely arising when analyzing post-processed or poorly sampled images), the constraint can be imposed that the local maximum should be at least 0.001 larger than the smallest value from the position of the maximum to the last value of the array. As a general rules, other options for implementing the search for the maximum match between the multiple low-pass filtered normalized Fourier-domain representations of the input imaging dataset and the input imaging dataset are conceivable.

While being related to the spatial-frequency structure of the signal component of the image, the spatial frequency $r_0$, 311 of the maximum 304 does not directly indicate the resolution of the input imaging dataset 190. According to examples, it is possible to estimate a value indicative of the resolution of the input imaging dataset 190.

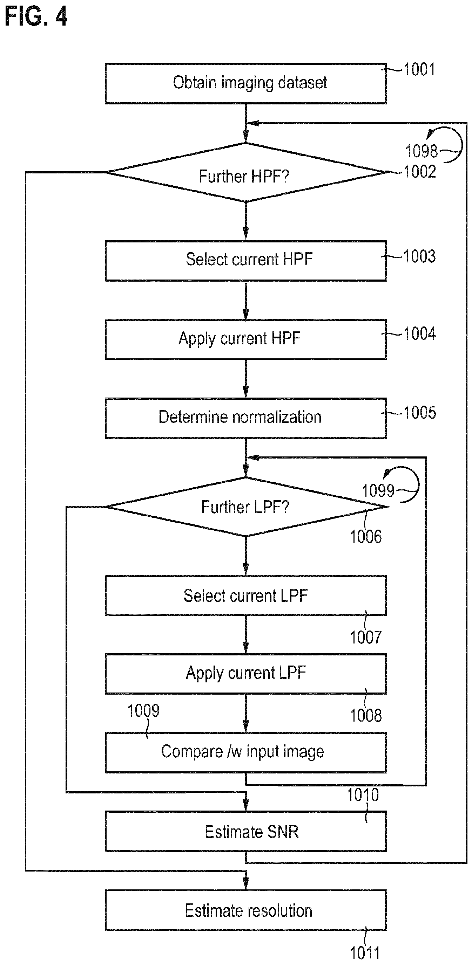

In detail: while so far processing of the input imaging dataset to extract a curve that exhibits a local maximum directly linked to the spatial frequency of the signal component hasbeen described. A further operation comprises repeating this for multiple high-pass filtered representations of the input imaging dataset and comparing the respective curves and picking the most suitable local maximum as the value indicative of the resolution of the input imaging dataset. Respective techniques are explained in connection with FIG. 4.

FIG. 4 is a flowchart of a method according to various examples. For example, the method according to FIG. 4 could be implemented by a control circuitry, e.g., the control circuitry formed by the processor 105 in the non-volatile memory 106 or also the processor 115 in the non-volatile memory 116 of the imaging device 111. Hereinafter, details of the method according to FIG. 4 will be described in connection with an embodiment in which the processor 105 and the non-volatile memory 106 are used to execute the method according to FIG. 4, but similar techniques may be employed for examples in which other control circuitry is are used to execute the method according to FIG. 4.

The method of FIG. 4 incorporates boxes 1001, 1006-1010 of the method of FIG. 2. As explained in connection with FIG. 2, this implements an inner loop 1099. The method of FIG. 4 also includes an outer loop 1098, each iteration of the outer loop 1098 including multiple iterations of the inner loop 1099. By using the outer loop 1098, it becomes possible to estimate the value that is indicative of the resolution of the input imaging dataset 190. The outer loop 1098 includes boxes 1002-1004; and 1011.

At box 1002, it is checked whether there are any yet unprocessed HPFs in a predefined set of HPFs. Different HPFs have different cut-off frequencies. If yes, then one of these yet unprocessed HPFs is selected at box 1003 and applied to the input imaging dataset 190 at box 1004. The yields a high-pass-filtered input imaging dataset.

This high-pass-filtered input imaging dataset is then handed over to the inner loop 1099, i.e., to box 1005.

Once the value indicative of the signal component has been estimated at box 1010, then the next iteration of the outer loop 1098 is triggered, be re-iterating box 1002 and selecting the next unprocessed HPF having another cut-off frequency.

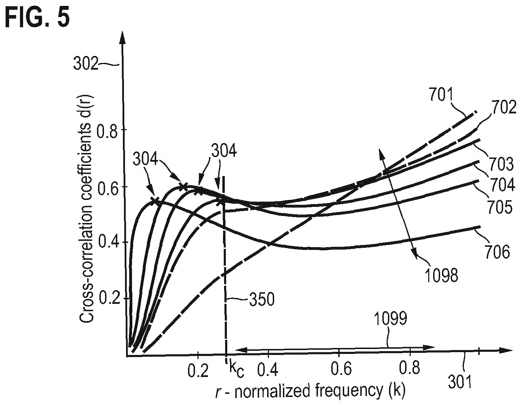

Then, once all HPFs have been processed, the method commences with box 1011. Here, a value indicative of the resolution of the input imaging dataset obtained at box 1001 is estimated. This is based on the values indicative of the signal component obtained from the various iterations of box 1010. Details with respect to this estimation of the resolution are explained in connection with FIG. 5.

FIG. 5 schematically illustrates - for multiple outer-loop iterations 1098 of FIG. 4, i.e., multiple HPFs having different cut-off frequencies - the results of the comparisons, here specifically the decorrelation value $d(r)$, 302; different ones of the curves 701-706 denote different HPFs at different outer-loop iterations 1098. Each one of the curves 701-706 is determined using multiple LPFs, i.e., having different cut-off frequencies 301, by the inner loop iteration 1099.

The HPFs (spanning the range from weak to very strong filtering) are used in order to attenuate the energy of the low frequencies of the input imaging dataset 190. For the high-pass filtered representations of the input imaging dataset 190, the decorrelation function $d(r)$ is computed and the spatial frequency of the local maximum 304 (marked with crosses in FIG. 5) are extracted. For example, for FIG. 5, the following set of pairs of the spatial frequencies 311 and the amplitude 312 are determined, as illustrated in Table 1 (values are given for illustrative purposes only, and do not describe actual measurement results):

Table 1

| Index $i$ | Curve | Maximum spatial frequency ($r_i$) | Maximum amplitude ($A_i$) |
|---|---|---|---|
| 1 | 701 | n/a - 0 | n/a - 0 |
| 2 | 702 | n/a - 0 | n/a - 0 |
| 3 | 703 | 0.29 | 0.55 |
| 4 | 704 | 0.21 | 0.59 |
| 5 | 705 | 0.18 | 0.595 |
| 6 | 706 | 0.08 | 0.545 |

Next, details with respect to the interpretation of Table 1 are given.

For example, if the HPF removes too much signal, the signal component will be significantly reduced and the respective curve (cf. FIG. 5, curves 701-702, dashed lines) - giving the decorrelation function d(r), will not exhibit a local maximum 304 and the peak position and amplitude will both be set to 0. By reducing the HPF cut-off frequency, at one point, at least some of the contributions to the signal component are preserved. Then, a local maximum is formed. Thus, by high-pass filtering the input imaging dataset, the transfer function is effectively modified in order to emphasize the high spatial frequencies. This provides a unique and robust way of estimating the resolution of the input imaging dataset based on the position of the local maxima.

There are multiple strategies available for the estimation of the resolution and two examples are given: firstly, selecting the particular maximum 304 having the largest spatial frequency 301 (in FIG. 5, curve 705); or, secondly, selecting the particular maximum 304 corresponding to the highest geometric mean $\sqrt{r_i A_i}$ which gives the same weight to the frequency and the amplitude. The maximums 304 correlate with the SNRs of the high-pass-filtered representations of the input imaging dataset 190: Thus, generally, the value indicative of the resolution can be determined based on (*i*) the maximum amplitude of the SNRs; (*ii*) the maximum spatial frequency of the SNRs; or (*iii*) a combination of the maximum amplitude and the maximum spatial frequency of the SNRs.

In FIG. 5, the corresponding value 350 indicative of the resolution is illustrated by the vertical dashed line and is positioned at the spatial frequency of the maximum 304 of the curve 703. The resolution is then resolution=(2*pixel size)/$k_c$, where $k_c$ is expressed in normalized frequencies and pixel size is the pixel size of the imaging dataset 190.

Next, details with respect to the HPFs are described (cf. FIG. 4: boxes 1002-1004). In order to find the highest significant spatial frequency $k_c$, the input imaging dataset is high-pass filtered in a smooth way, in order to weaken low frequencies contributions. Gaussian filtering can be used, e.g., in real space / imaging domain. This operation could also be implemented in Fourier domain for processing speed optimization. One can obtain the high-pass filtered version of the image $I$ as:

$$I_{HP}(x) = I(x) - I_{LP}(x; \sigma) \qquad (S15)$$

where $I_{LP}(x; \sigma)$ is the low-pass version of the input imaging dataset filtered with a Gaussian of standard deviation $\sigma$.

In a typical implementation, ten outer-loop iterations 1098 using different cut-off frequencies are used, e.g.,

with $\sigma_i = e^{\frac{i}{N_g}\left(\log\left(\frac{2}{r_0}\right)-\log(0.15)\right)+\log(0.15)}$. Each $\sigma$ is then exponentially distributed between $\frac{2}{r0}$ (weak high-pass) and 0.15 (very strong high-pass) where $r_0$ is expressed in pixels units. For each high-pass filtered representation of the input imaging dataset, a corresponding decorrelation function is computed and the local maximum position and amplitude are extracted [$r_i$, $A_i$], see Table 1. Then, the spatial frequency and the largest geometric mean from all local maxima is obtained. The $\sigma_B$ corresponding to the "best" curve is identified for both criterion and the whole procedure is repeated with refined high-pass filtering distributed between min($\sigma_{B,gm}$, $\sigma_{B,max}$) and max($\sigma_{B+1,gm}$, $\sigma_{B+1,max}$). While it is not the fastest implementation (more advanced method could be used to improve the convergence and minimize the number of correlations to be computed), it guarantees a result in a fixed and reasonable computation time (typical processing speeds are ranging from 1 to 15 seconds depending on the implementation, the size of the image and the number of points $N_r$ and $N_g$ used for the computation). The resolution is then defined as $resolution = \frac{2}{k_c}$, where

$$k_c = \max_{i=[1,N_g]} r_i$$ is expressed in [1/um].

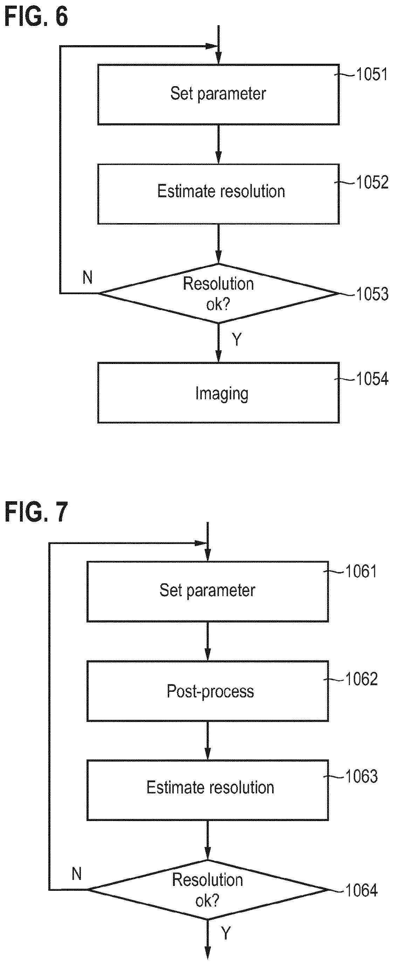

Such estimating of the value 450 indicative of the resolution can also be used to optimize image quality during experiments and throughout data post-processing. A respective scenario is illustrated n FIG. 6.

FIG. 6 is a flowchart of a method according to various examples. For example, the method according to FIG. 6 could be implemented by a control circuitry, e.g., the control circuitry formed by the processor 105 in the non-volatile memory 106 or also the processor 115 in the non-volatile memory 116 of the imaging device 111. Hereinafter, details of the method according to FIG. 6 will be described in connection with an embodiment in which the processor 105 and the non-volatile memory 106 are used to execute the method according to FIG. 6, but similar techniques may be employed for examples in which other control circuitry is are used to execute the method according to FIG. 6.

At box 1051, one or more imaging modality configuration parameters of the imaging device 111 are set, e.g., by means of the control data 195. As a general rule, depending on the particular implementation of the imaging device 111, the information content of the control data 195 and the particular one or more imaging modality configuration parameters may vary. For example, for an optical microscope, one or more of the following imaging modality configuration parameters are conceivable: autofocus; illumination strength or direction; aberration correction; etc. For example, for a magnetic resonance imaging apparatus, one or more of the following imaging modality configuration parameters are conceivable: sampling bandwidth; field-encoding gradient strength; sampling scheme, trajectory shape; etc. For example, for an atomic-force microscope, one or more of the following imaging modality configuration parameters are conceivable: drive frequency; contact mode versus non-contact mode; drive amplitude; etc. For example, for an X-ray imaging device, one or more of the following imaging modality configuration parameters are conceivable: acceleration voltage; sampling duration; etc..

Then, at box 1052, the value indicative of the resolution is estimated, e.g., based on a sample imaging dataset acquired using the one or more imaging modality configuration parameters set at box 1051. This means that the method of FIG. 4 could be executed. In other examples, it would be sufficient to estimate the value indicative of the signal component, e.g., by executing the method of FIG. 2.

At box 1053, it is checked whether the value indicative of the resolution fulfils one or more check criteria. For example, a static, predefined reference may be used. It would also be possible that a closed-loop control is implemented for the one or more imaging modality configuration parameters based on the value indicative of the resolution. In such a case, the check at box 1053 could include a control deviation.

If, at box 1053, it is judged that the value indicative of the resolution does not fulfil the one or more check criteria, then box 1051 is re-executed and the one or imaging modality configuration parameters are set to different values. Otherwise, imaging can commence at box 1054 using the currently valid one or imaging modality configuration parameter settings.

FIG. 7 is a flowchart of a method according to various examples. For example, the method according to FIG. 7 could be implemented by a control circuitry, e.g., the control circuitry formed by the processor 105 in the non-volatile memory 106 or also the processor 115 in the non-volatile memory 116 of the imaging device 111. Hereinafter, details of the method according to FIG. 7 will be described in connection with an embodiment in which the processor 105 and the non-volatile memory 106 are used to execute the method according to FIG. 7, but similar techniques may be employed for examples in which other control circuitry is are used to execute the method according to FIG. 7.

At box 1061, one or more post-processing configuration parameters of a post-processing algorithm used to post-process a raw imaging dataset acquired by the imaging device 111 are set; the post-processing of the raw imaging dataset then yields the imaging dataset. More specifically, values of the one or more post-processing configuration parameters can be determined.

As a general rule, depending on the particular implementation of the imaging device 111, the post-processing algorithm may vary; and, along with different post-processing algorithms, the one or more post-processing configuration parameters may vary. For example, for an optical microscope, one or more of the following post-processing algorithms are conceivable: bandpass filter to suppress frequency-selective noise; Fourier-domain filtering; etc.. Here, conceivable one or more post-processing configuration parameters may be cut-off frequencies of the bandpass filters, a strength of the Fourier-domain filtering, etc.. For example, for a magnetic-resonance imaging dataset, one or more of the following post-processing algorithms are conceivable: reconstruction of undersampled data samples, e.g., using partial parallel acquisition with multiple coils of distinct sensitivity profiles; decomposition of multiple spin species; etc.. Here, conceivable one or more post-processing configuration parameters may be: sensitivity profiles of the coils, spin-species composition, etc.. For super-resolution imaging, the post-processing can include analysing a time series of stochastically blinking emitters. Stochastic Optical Fluctuation Imaging (SOFI) achieves super-resolution by computing high-order spatiotemporal cumulants. SOFI post-processing is of interest to analyse because it predicts a resolution improvement of $1/\sqrt{n}$, where n is the correlation order and $1/n$ after deconvolution and brightness linearization. SOFI is generally described in Dertinger, T., Colyer, R., Iyer, G., Weiss, S. & Enderlein, J. Fast, background-free, 3D super-resolution optical fluctuation imaging (SOFI). Proc. Natl. Acad. Sci. U. S. A. 106, 22287-92 (2009); as well as Dertinger, T., Colyer, R., Vogel, R., Enderlein, J. & Weiss, S. Achieving increased resolution and more pixels with Super-resolution Optical Fluctuation Imaging (SOFI). Opt. Express 18, 18875-18885 (2010). Here, conceivable one or more post-processing configuration parameters may be Gaussian point spread function Full-Width at Half-Maximum, the number of images used to compute a single SOFI image, number of iterations of Lucy-Richardson deconvolution in the framework of the SOFI algorithm and the numerical bleaching and drift correction.

Next, at box 1062, the post-processing algorithm is applied. Box 1062 yields a candidate image dataset, as an output of the post-processing algorithm.

For example, initially predefined seed values may be chosen for the one or more post-processing configuration parameters in the first iteration of box 1062. In subsequent iterations of box 1062, the one or more post-processing configuration parameters can be set based on the value indicative of the resolution estimated at an iteration of box 1063:

At box 1063, the value indicative of the resolution is estimated for the image dataset obtained from the current iteration of box 1062. This means that the method of FIG. 4 could be executed. In other examples, it would be enough to estimate the value indicative of the signal component, e.g., by executing the method of FIG. 2.

At box 1064, it is then judged whether the value indicative of the resolution fulfils one or more check criteria.

If, at box 1064, it is judged that the value indicative of the resolution does not fulfil the one or more check criteria, then box 1061 is re-executed and the one or more post-processing configuration parameters are set to different values. For example, an iterative optimization may be used to determine the variation of the one or more post-processing configuration parameters from iteration to iteration of box 1061. For example, a genetic algorithm or a gradient descent optimization algorithm may be used.

If, at box 1064, it is judged that the value indicative of the resolution does fulfils the one or more check criteria, then the imaging dataset may be judged to have a satisfying quality.

Summarizing, above techniques of benchmarking an imaging dataset have been described. For example, the SNR or the resolution can be estimated. According to the techniques described herein, instead of searching for the frequency at which the transfer function of the imaging device vanishes (which can only be measured in the absence of noise) according to reference implementations, the highest frequency from the local maxima of the decorrelation functions is searched. This enables parameter-free image resolution estimation. The techniques described herein do not directly estimate the theoretical resolution as stated by Abbe, but rather the highest frequency with high enough signal with respect to the noise. More specifically, the values indicative of the signal component or indicative of the resolution also comprise a contribution of the sample included in the imaging dataset, i.e., the signal component. Thus, the techniques described herein deviate from classical definitions of resolution that are based on the transfer function of the optical device alone. It provides a rapid and objective way to quantify the frequency content of a single image without any user-defined parameter. The novel algorithm is model-free and does not require any user-defined parameters.

For sake of completeness, next, Eq. (1) is motivated.

Consider an incoherent imaging apparatus characterized by the ideal transfer function $H(k)$ of frequency support $k_{th}$:

$$H(k) = \begin{cases} 1 - \dfrac{|k|}{k_{th}} & |k| < k_{th} \\ 0 & otherwise \end{cases} \tag{S1}$$

where $k = \sqrt{k_x^2 + k_y^2}$. An idealized point emitter of brightness $A$ located on the optical axis is imaged. During the acquisition, the image is corrupted with pure white noise. The resulting intensity $I(k)$ is expressed in Fourier space, as

$$I(k) = A\left(1 - \frac{|k|}{k_{th}}\right)(|k| < k_{th}) + e^{i\theta(k)} \tag{S2}$$

where $\theta(k)$ is the random phase of the white noise.

The decorrelation analysis, i.e. the computation of the partial phase cross-correlation between the original image and its normalized version is expressed in Fourier space as

$$d(r) = \frac{\iint_{-\infty}^{\infty} Re\left\{I(k)\dfrac{I^*(k)}{|I(k)|}M(k;r)\right\}dk_x dk_y}{\sqrt{\iint_{-\infty}^{\infty}|I(k)|^2 dk_x dk_y \iint_{-\infty}^{\infty}\left|\dfrac{I(k)}{|I(k)|}M(k;r)\right|^2 dk_x dk_y}} \tag{S3}$$

where $M(k;r)$ is a binary mask of radius $r$. The expression of the partial phase correlation in Fourier space allows to make several general considerations. Using complex arithmetic, the numerator can be simplified as $I(k)\dfrac{I^*(k)}{|I(k)|} = |I(k)|$, while the denominator is composed of two terms. The first is simply the energy of the input image. This number does not depend on $r$ and normalizes the function $d(r)$ between 0 and 1. Finally, due to the normalization, the last term is equal to the mask $\left|\dfrac{I(k)}{|I(k)|}M(k;r)\right|^2 = M(k;r)$.

Transforming equation S3 to polar coordinates $[k_x, k_y] \Rightarrow [k_r, \theta]$ yields

$$d(r) = \frac{\int_0^{2\pi} \int_0^1 |I(k)| M(k;r) k_r dk_r d\theta}{\sqrt{E \int_0^{2\pi} \int_0^1 M(k;r) k_r dk_r d\theta}} \tag{S4}$$

where $E$ stands for the energy of the input image (which is independent over coordinate transform) and where we used the Cartesian-Polar transformation $dk_x dk_y = k_r dk_r d\theta$. Using the simplified imaging model introduced above, it is possible to analytically solve the expression for $d(r)$ and get a better understanding of how the function depends on the image transfer function.

Starting with the numerator of equation S4 and using the fact that the mask $M(k;r)$ is 0 for $k_r > r$:

$$\int_0^{2\pi} \int_0^1 |I(k)| M(k;r) k_r dk_r 2 d\theta$$
$$= 2\pi \int_0^r \left| A\left(1 - \frac{|k|}{k_{th}}\right)(|k| < k_{th}) + e^{i\theta(k)} \right| k_r dk_r \tag{S5}$$

In order to be able to integrate the noise term $e^{i\theta(k)}$ analytically, the additional assumption that the random phase fluctuations averages out under integration is made, which allows to approximate the expression S5 as the sum of the transfer function and the noise:

$$2\pi \int_0^r \left| A\left(1 - \frac{|k|}{k_{th}}\right)(|k| < k_{th}) + e^{i\theta(k)} \right| k_r dk_r$$
$$\approx 2\pi \int_0^r A\left(1 - \frac{|k|}{k_{th}}\right)(|k| < k_{th}) k_r dk_r + \pi r^2 \tag{S6}$$

The remaining integration is trivial and we obtain for the numerator of equation S4

$$d_{num}(r) \approx \begin{cases} 2\pi A\left(\frac{r^2}{2} - \frac{r^3}{3k_{th}}\right) + \pi r^2 & for\ r \leq k_{th} \\ \frac{\pi A}{3} k_{th}^2 + \pi r^2 & for\ r > k_{th} \end{cases} \tag{S7}$$

Using similar argumentation, we can express the signal energy $E$ as

$$E = \pi \left[\frac{A^2 k_{th}^2}{6} + \frac{2 A k_{th}^2}{3} + 1\right] \tag{S8}$$

and the normalized denominator term of equation S4 as

$$\int_0^{2\pi} \int_0^1 M(k;r) k_r dk_r d\theta = \pi r^2 \tag{S9}$$

Using equations S7, S8 and S9, one obtains for the decorrelation function $d(r)$ (for $r < k_{th}$)

$$d(r) = \frac{2\pi A \left(\dfrac{r^2}{2} - \dfrac{r^3}{3k_{th}}\right) + \pi r^2}{\sqrt{\pi \left[\dfrac{A^2 k_{th}^2}{6} + \dfrac{2A k_{th}^2}{3} + 1\right] \pi r^2}} \qquad \text{(S10)}$$

From S10, it is clear that if A << 1 , i.e. the signal is extremely weak compared to the noise, the decorrelation function becomes a line with a slope of 1.

$$d_{A \ll 1}(r) \approx \frac{\pi r^2}{\sqrt{\pi^2 r^2}} = r \qquad \text{(S11)}$$

One finds the spatial frequency position of the local maxima by computing the partial derivative of the analytical expression of equation S10 with respect to $r$:

$$r_{max} = \frac{3k_{th}(A + 1)}{4A} \qquad \text{(S12)}$$

expression S12 is only valid for $r < k_{th}$ and that $r_{max} = k_{th}$ when $A = 3$. For this basic model, an amplitude below 3 will not yield any local maxima.

This result shows that, as long as the signal component is strong enough, there is always a local maximum. Moreover, the position of the local maximum is directly connected to the cutoff frequency $k_{th}$.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various techniques have been described in connection with estimating the resolution of a supra-resolution microscopy imaging dataset. The techniques described herein may also be employed for other imaging modalities such as magnetic resonance imaging, atomic force microscopy, conventional optical microscopy, etc.

## Claims

1. A method of estimating a value (311-313) indicative of a signal component of an input imaging dataset (190), the method comprising:

   - determining a normalized Fourier-domain representation of the input imaging dataset (190),
   - for each one of multiple low-pass filters (320) having varying cut-off frequencies (301, 301-1, 301-2): determining the respective low-pass filtered normalized Fourier-domain representation of the input imaging dataset (190) based on the normalized Fourier-domain representation of the input imaging dataset and performing a respective comparison of the respective low-pass filtered normalized Fourier-domain representation of the input imaging dataset with the input imaging dataset, and
   - based on results (302, 303) of the comparisons associated with the low-pass filters: estimating the value (311-313) indicative of the signal component of the input imaging dataset (190).

2. The method of claim 1, further comprising:

   - based on the results (302, 303) of the comparisons: searching for a maximum match (304) between the multiple low-pass filtered normalized Fourier-domain representations of the input imaging dataset (190), and the input imaging dataset,

   wherein the value (311, 312) indicative of the signal component is estimated based on said searching of the maximum match.

**3.** The method of claim 1 or 2,
wherein the comparisons associated with the low-pass filters comprise Fourier-domain correlations between the low-pass filtered normalized Fourier domain representations of the input imaging dataset and a Fourier domain representation of the input imaging dataset.

**4.** The method of any one of the preceding claims,
wherein the respective low-pass filtered normalized Fourier-domain representation of the input imaging dataset (190) is determined for each one of the low-pass filters using a binary Fourier-domain filter mask having a radius associated with the respective cut-off frequency (301, 301-1, 301-2).

**5.** The method of any one of the preceding claims,
wherein the value indicative of the signal component is determined as cut-off frequency (311) of the low-pass filters providing a weighted or non-weighted maximum match between the low-pass filtered normalized Fourier-domain representations of the input imaging dataset and the input imaging dataset.

**6.** The method of claim 5,
wherein the maximum match is weighted by an amplitude of the maximum match.

**7.** A method of determining a value (350) indicative of a resolution of an imaging dataset (190), the method comprising:

- for each one of multiple high-pass filters having varying cut-off frequencies: determining a respective high-pass filtered representation of the imaging dataset (190) and determining the respective value indicative of the signal component using respective high-pass filtered representation of the imaging dataset as the input imaging dataset of the method of any one of claims 1 to 6, and
- based on the values indicative of the signal component: estimating the value (350) indicative of the resolution of the imaging dataset.

**8.** The method of claim 7,
wherein the value indicative of the resolution of the imaging dataset is determined based on at least one of a maximum amplitude or a maximum spatial frequency of the values indicative of the signal component of the imaging datasets (190).

**9.** The method of claim 7 or 8, further comprising:

- obtaining the imaging dataset (190) from an imaging device (111), and
- configuring one or more imaging modality configuration parameters of the imaging device (111) based on the value indicative of the resolution.

**10.** The method of claim 9, further comprising:

- implementing a closed-loop control of the one or more imaging modality configuration parameters of the imaging device (111) based on the value indicative of the resolution.

**11.** The method of any one of claims 7 to 10, further comprising:

- applying a post-processing algorithm to a raw imaging dataset, to thereby obtain the imaging dataset, and
- configuring one or more post-processing configuration parameters of the post-processing algorithm based on the value indicative of the resolution.

**12.** The method of claim 11,
wherein said configuring of the one or more post-processing configuration parameters comprises an iterative optimization.

**13.** The method of any one of claims 7 to 12,
wherein the imaging dataset is a super-resolution microscopy imaging dataset.

**14.** A device (101, 111) comprising control circuitry (105-106, 115-116) configured to:

- determine a normalized Fourier-domain representation of an input imaging dataset (190),
- for each one of multiple low-pass filters (320) having varying cut-off frequencies (301, 301-1, 301-2): determine the respective low-pass filtered normalized Fourier-domain representation of the input imaging dataset (190) based on the normalized Fourier-domain representation of the input imaging dataset and perform a respective comparison of the respective low-pass filtered normalized Fourier-domain representation of the input imaging dataset with the input imaging dataset, and
- based on results (302, 303) of the comparisons associated with the low-pass filters: estimate a value (311-313) indicative of a signal component of the input imaging dataset (190).

**15.** The device (101, 111), wherein the control circuitry (105-105, 115-116) is configured to perform the method of any one of claims 1 to 13.

# FIG. 1

# FIG. 2

Obtain imaging dataset ⌐1001

Determine normalization ⌐1005

Further LPF? 1099 / 1006

N

Y

Select current LPF

1007

Apply current LPF

1009 / 1008

Compare /w input image

1010

Estimate SNR

# FIG. 3

# FIG. 4

Obtain imaging dataset — 1001

Further HPF? 1098 — 1002

Select current HPF — 1003

Apply current HPF — 1004

Determine normalization — 1005

Further LPF? 1099 — 1006

Select current LPF 1007

Apply current LPF 1008

Compare /w input image 1009

Estimate SNR 1010

Estimate resolution 1011

# FIG. 5

**FIG. 6**

```
                    ┌─────────────────────────┐
                    │      Set parameter      │──1051
                    └─────────────────────────┘
                                │
                                ▼
                    ┌─────────────────────────┐
                    │    Estimate resolution  │──1052
                    └─────────────────────────┘
                                │
                                ▼
          N            ◇ Resolution ◇
      ┌────────────────    ok?        ────1053
      │                      
      │                     │ Y
      │                     ▼
      │         ┌─────────────────────────┐
      │         │        Imaging          │──1054
      │         └─────────────────────────┘
```

**FIG. 7**

```
                    ┌─────────────────────────┐
                    │      Set parameter      │──1061
                    └─────────────────────────┘
                                │
                                ▼
                    ┌─────────────────────────┐
                    │      Post-process       │──1062
                    └─────────────────────────┘
                                │
                                ▼
                    ┌─────────────────────────┐
                    │    Estimate resolution  │──1063
                    └─────────────────────────┘
                                │
                                ▼
          N            ◇ Resolution ◇
      ┌────────────────    ok?        ────1064
      │                      
                             │ Y
                             ▼
```

Europäisches
Patentamt

European
Patent Office

Office européen
des brevets

# EUROPEAN SEARCH REPORT

Application Number

EP 19 18 0900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Robert Nieuwenhuizen ET AL: "Measuring image resolution in optical nanoscopy", Nature methods, 1 June 2013 (2013-06-01), page 557, XP055140756, United States DOI: 10.1038/nmeth.2448 Retrieved from the Internet: URL:http://search.proquest.com/docview/1357394150 [retrieved on 2019-11-15] * abstract * * page 557 - page 558 * | 1-15 | INV. G06T7/00 |
| A | GIORGIO TORTAROLO ET AL: "Evaluating image resolution in stimulated emission depletion microscopy", OPTICA, vol. 5, no. 1, 8 January 2018 (2018-01-08) , page 32, XP055643205, DOI: 10.1364/OPTICA.5.000032 * abstract * * page 33 - page 34 * | 1-15 | |
| A | BANTERLE NICCOLÒ ET AL: "Fourier ring correlation as a resolution criterion for super-resolution microscopy", JOURNAL OF STRUCTURAL BIOLOGY, ACADEMIC PRESS, UNITED STATES, vol. 183, no. 3, 16 May 2013 (2013-05-16), pages 363-367, XP028708762, ISSN: 1047-8477, DOI: 10.1016/J.JSB.2013.05.004 * the whole document * | 1-15 | TECHNICAL FIELDS SEARCHED (IPC) G06T |

The present search report has been drawn up for all claims

| Place of search | Date of completion of the search | Examiner |
|---|---|---|
| Munich | 15 November 2019 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HEEL, M. VAN.** Similarity measures between images. *Ultramicroscopy,* 1987, vol. 21, 95-100
- **SAXTON, W. ; BAUMEISTER, W.** The correlation averaging of a regularly arranged bacterial cell envelope protein. *J. Microsc.,* 1982, vol. 127, 127-138
- **HARAUZ, G. ; VAN HEEL, M.** Exact filters for general geometry three dimensional reconstruction. *Optik,* 1986, vol. 78, 146-156
- **SHEPPARD, C. J. R.** Resolution and super-resolution. *Microsc. Res. Tech.,* 2017, vol. 80, 590-598
- **POWER, R. M. ; HUISKEN, J.** Adaptable, illumination patterning light sheet microscopy. *Sci. Rep.,* 2018, vol. 8, 1-11

- **ŠTEFKO, M. ; OTTINO, B. ; DOUGLASS, K. M. ; MANLEY, S.** Autonomous illumination control for localization microscopy. *Opt. Express,* 2018, vol. 26, 30882-30900
- **DERTINGER, T. ; COLYER, R. ; IYER, G. ; WEISS, S. ; ENDERLEIN, J.** Fast, background-free, 3D super-resolution optical fluctuation imaging (SOFI). *Proc. Natl. Acad. Sci. U. S. A.,* 2009, vol. 106, 22287-92
- **DERTINGER, T. ; COLYER, R. ; VOGEL, R. ; ENDERLEIN, J. ; WEISS, S.** Achieving increased resolution and more pixels with Super-resolution Optical Fluctuation Imaging (SOFI). *Opt. Express,* 2010, vol. 18, 18875-18885